# EUROPEAN PATENT SPECIFICATION

(11) **EP 2 796 714 B1**
(45) Date of publication and mention of the grant of the patent: **08.03.2017**
(21) Application number: 14150533.9
(22) Date of filing: 09.01.2014
(51) Int. Cl.: F04B 17/02, F04B 1/053, F03C 1/053, F04B 1/04, F03C 1/30

(54) **Hydraulic machine of radial piston type, hydraulic transmission and wind turbine generator**
Hydraulikmaschine vom Radialkolbentyp, hydraulisches Getriebe und Windturbinengenerator
Machine hydraulique de type à pistons radiaux, transmission hydraulique et générateur de turbine éolienne

(30) Priority: 26.04.2013 JP 2013093262
(43) Date of publication of application: 29.10.2014
(73) Proprietor: MITSUBISHI HEAVY INDUSTRIES, LTD., Tokyo 108-8215 (JP)
(72) Inventor: Sasaki, Masashi, TOKYO, 108-8215 (JP); Yoshimi, Takeshi, TOKYO, 108-8215 (JP)
(74) Representative: Intès, Didier Gérard André

(56) References cited:
- GB-A- 2 482 879
- GB-A- 2 484 890
- JP-A- H0 791 452
- US-A- 3 768 378
- US-A- 5 503 481
- US-A- 5 634 777
- Ondrej Jusko ET AL: "Surface Quality of Bearing Steel after Grinding" In: 1 January 2012 (2012-01-01), XP055132501, vol. 11 * the whole document *

## Description

### [Technical Field]

The present invention relates to a hydraulic machine of a radial piston type, a hydraulic transmission and a wind turbine generator.

### [Background Art]

Conventionally known is a hydraulic machine of a radial piston type having a plurality of pistons that are radially arranged.

For instance, disclosed in GB 2484890 A is a hydraulic machine of a radial piston type provided with a piston reciprocating in a cylinder, a roller rotatably attached to the piston and a ring cam having a cam surface on which the roller rolls. Another radial piston hydraulic machine, which functions as a drive train of a wind turbine generator, is shown in GB 2482879 A and is, like the hydraulic machine according to US 5,634,777 A, a hydraulic machine according to the preamble of claim 1. A roller bearing is shown with an isotropic working surface in US 5,503,481 A and with a working surface having axial depressions in JP-H07-91452 A.
US 5,503,481 A also discloses irregularities having a direction directed along the rotation axis and irregularities having a direction coinciding with the rotation direction.

### [Summary]

### [Technical Problem]

In a hydraulic machine of a radial piston type, lubricating oil is normally supplied to a space between a roller and a cam surface to suppress deterioration of the cam surface. Normally, the cam surface is formed into a smooth surface by polishing to reduce friction against the roller. There are, however, minute grooves formed during polishing. Thus, the lubricating oil to be maintained between the cam surface and the roller may leak, resulting in insufficient lubricating oil maintained between the cam surface and the roller. When an oil film on the cam surface becomes thin, the surface is prone to damage, and this could reduce the cam life.

In this aspect, there is no disclosure regarding lubricity between the roller and the cam in GB 2484890 A and GB 2482879 A, which disclose the configuration of the hydraulic machine of a radial piston type with the roller rolling on the cam surface.

An object of at least one embodiment of the present invention is to provide a hydraulic machine of a radial piston type, a hydraulic transmission and a wind turbine generator which make it possible to maintain excellent lubricity between the cam surface and the roller and to enhance the cam life.

### [Solution to Problem]

The present invention is defined in the apparatus claim 1. According to the hydraulic machine of claim 1, it is possible to retain lubricating oil between the cam surface and the roller, and to maintain favorable lubricity between the cam surface and the roller.

In the case where the polishing direction of the cam surface coincides with the rotation direction of the rotation shaft, the direction of the minute grooves formed by polishing coincides with a rolling direction of the roller with respect to the cam surface. Thus, when the roller rolls on the cam surface, the lubricating oil escapes along the minute grooves formed by polishing, which makes it difficult to retain the oil film of sufficient thickness in a contact part of the cam surface and the roller. Therefore, by setting the polishing direction of the cam surface different from the rotation direction of the rotation shaft, the lubricating oil is retained in the minute grooves, thereby retaining the oil film on the cam surface and maintaining favorable lubricity between the cam surface and the roller. As a result, the deterioration of the cam surface can be reduced and the cam life can be improved.

Further, "the polishing direction of the cam surface is different from the rotation direction of the rotation shaft" means that the polishing direction does not include a direction which coincides with the rotation direction of the rotation shaft, and includes the case where there is not one or more particular directions recognized as a polishing direction (the case where the polishing direction of the cam surface possesses isotropy).

In some embodiments, a friction coefficient between the roller and the cam surface is set larger a friction coefficient between the roller and the piston so that skidding does not occur between the cam surface and the roller.

The above hydraulic machine is configured so that the roller rolls on the cam surface. However, the roller skids sometimes on the cam surface 33. This could result in seizure or smearing. Therefore, in some embodiments, a friction coefficient between the roller and the cam surface is set larger a friction coefficient between the roller and the piston so that skidding does not occur between the cam surface and the roller. As a result, the roller can smoothly roll on the cam surface without skidding, and thus it is possible to prevent occurrence of failure such as seizure and smearing. Therefore, the cam life can be further enhanced.

When a polishing direction of the cam surface is a direction along the rotation shaft, an oil film can be reliably formed on a contact part of the cam surface and the roller, and the lubricity between the cam and the roller can be favorably maintained.

According to the invention, the polishing direction of the cam surface may include a first direction which is oblique to the rotation shaft and a second direction which intersects the first direction and is oblique to the rotation shaft.

As a result, the oil film can be reliably formed on a contact part of the cam surface and the roller, and the lubricity between the cam and the roller can be favorably maintained.

When a polishing direction of the cam surface possesses isotropy, an oil film can be reliably formed on a contact part of the cam surface and the roller, and the lubricity between the cam and the roller can be favorably maintained.

In some embodiments, a plurality of dimples is formed on the cam surface.

As a result, the lubricating oil can be retained in the plurality of dimples formed on the cam surface, the oil film can be reliably formed on the contact part of the cam surface and the roller, and the lubricity between the cam and the roller can be favorably maintained.

In one embodiment, the cam surface has a Brinell hardness of not less than 600.

As a result, it is possible to achieve the configuration in which the cam surface is not damaged easily, and hence it is possible to further improve the cam life.

In one embodiment, the cam surface has a Brinell hardness of not greater than 800.

Generally, to suppress friction in a contact part between two objects, it is considered desirable to improve lubricity by smoothing the surface. Thus, the smaller the surface roughness Ra of the cam surface is, the longer the cam life becomes. However, according to knowledge of the inventors of the present invention, when the surface roughness of the cam surface is less than 0.1, the lubricity in the contact part between the cam surface and the roller is improved but it becomes difficult to retain the lubricating oil on the cam surface. As a result, it becomes difficult to maintain sufficient oil film thickness, resulting in deteriorated seizure-resistance. Further, when the surface roughness of the cam surface is greater than 0.3, the sufficient oil fill thickness can be obtained but the lubricity in the contact part between the cam surface and the roller declines. Therefore, as described in the above embodiment, by setting the surface roughness Ra of the cam surface to be not less than 0.1 and not greater than 0.3, the lubricity between the cam surface and the roller can be favorably maintained while retaining the lubricating oil of sufficient thickness on the cam surface to maintain seizure resistance.

According to the invention, the cam includes a high pressure region of the cam surface and a low pressure region of the cam surface, the high pressure region contacting the roller corresponding to a hydraulic chamber surrounded by the piston and the cylinder and undergoing pressure increase in the hydraulic chamber in a reciprocation cycle of the piston reciprocating in the cylinder, the low pressure region contacting the roller corresponding to a hydraulic chamber surrounded by the piston and the cylinder and undergoing pressure decrease in the hydraulic chamber in the reciprocation cycle, and the low pressure region has a surface roughness Ra which is greater than that of the high pressure region.

In the case where the sliding part between the piston and the roller is lubricated with the operating oil from the hydraulic chamber, while the roller is in the high pressure region of the cam surface, the operating oil is positively supplied to the sliding part between the piston and the roller, thereby significantly reducing the friction coefficient of the roller with respect to the piston. In contrast, while the roller is in the low pressure region of the cam surface, the operating oil pressure is low in the hydraulic chamber, and thus the operating oil is not sufficiently supplied to the sliding part between the piston and the roller. Hence, the friction coefficient between the roller and the piston remains large. Therefore, compared to the case when the roller is at a position in the high pressure region of the cam surface, skidding is likely to occur between the roller and the cam surface when the roller is at a position in the low pressure region of the cam surface.

Therefore, by setting the surface roughness of the low pressure region greater than that of the high pressure region, the friction efficient between the roller and the cam surface (low pressure region) can be sufficiently secured and thus, it is possible to prevent skidding between the roller and the cam, which easily happens when the roller is in the low pressure region of the cam surface. This improves the durability against smearing, seizure, etc. which is caused by skidding. By selectively reducing the surface roughness in the high pressure region with distribution in the surface roughness Ra of the cam surface, in comparison to the case where the surface roughness is uniform throughout the cam surface, it is possible to avoid excessive designing, to prevent size increase of the hydraulic machine, and to improve reliability of the hydraulic machine.

A hydraulic transmission according to at least one embodiment of the present invention, comprises:
a hydraulic pump configured to be driven by rotation of a rotation shaft; and
a hydraulic motor configured to be driven by pressurized oil generated by the hydraulic pump, and
at least one of the hydraulic pump or the hydraulic motor is a hydraulic machine of claim 1.

According to the above hydraulic transmission, by making the polishing direction of the cam surface different from the rotation direction of the rotation shaft, the lubricating oil is retained in the minute grooves formed on the cam surface by polishing, thereby making it possible to retain the oil film on the cam surface and to keep favorable lubricity between the cam surface and the roller. As a result, the deterioration of the cam surface can be suppressed and the cam life can be improved.

In some embodiments, a friction coefficient between the roller and the cam surface is set larger than a friction coefficient between the roller and the piston so that skidding does not occur between the cam surface and the roller.

With the above configuration in which the friction coefficient between the roller and the cam surface is set larger than the friction coefficient between the roller and the piston so that skidding does not occur between the cam surface and the roller, the roller can smoothly roll on the cam surface without skidding, and thus it is possible to prevent occurrence of failure such as seizure and smearing. Therefore, the cam life can be enhanced.

A wind turbine generator according to at least one embodiment of the present invention comprises:
at least one blade;
a hub on which the at least one blade is mounted;
a hydraulic pump configured to be driven by rotation of the hub;
a hydraulic motor configured to be driven by pressurized oil generated by the hydraulic pump; and
a generator configured to be driven by the hydraulic motor, and
at least one of the hydraulic pump or the hydraulic motor is a hydraulic machine of claim 1.

According to the above wind turbine generator, by making the polishing direction of the cam surface different from the rotation direction of the rotation shaft, the lubricating oil is retained in the minute grooves formed on the cam surface by polishing, thereby making it possible to retain the oil film on the cam surface and to keep favorable lubricity between the cam surface and the roller. As a result, the deterioration of the cam surface can be suppressed and the cam life can be improved.

In some embodiments, a friction coefficient between the roller and the cam surface is set larger than a friction coefficient between the roller and the piston so that skidding does not occur between the cam surface and the roller.

With the above configuration in which the friction coefficient between the roller and the cam surface is set larger than the friction coefficient between the roller and the piston so that skidding does not occur between the cam surface and the roller, the roller can smoothly roll on the cam surface without skidding, and thus it is possible to prevent occurrence of failure such as seizure and smearing. Therefore, the cam life can be enhanced.

### [Effects]

According to at least one embodiment of the present invention, by making the polishing direction of the cam surface different from the rotation direction of the rotation shaft, the lubricating oil is retained in the minute grooves formed on the cam surface by polishing, thereby making it possible to retain the oil film on the cam surface and to keep favorable lubricity between the cam surface and the roller. As a result, the deterioration of the cam surface can be suppressed and the cam life can be improved.

### BRIEF DESCRIPTION OF DRAWINGS

[FIG.1] FIG.1 is an illustration of a wind turbine generator according to an embodiment.
[FIG.2] FIG.2 is a cross-sectional view of a hydraulic machine according to an embodiment, taken along a radial direction.
[FIG.3] FIG.3 is a cross-sectional view of a configuration in the periphery of a cylinder of the hydraulic machine according to an embodiment.
[FIG.4] FIG.4 is an oblique view of a cam illustrating a polishing direction of a cam surface according to an embodiment, which is an embodiment according to the invention.
[FIG.5] FIG.5 is an oblique view of the cam illustrating a polishing direction of the cam surface according to an embodiment, which is an embodiment according to the invention.
[FIG.6A] FIG.6A is a cross-sectional view of a piston according to an embodiment.
[FIG.6B] FIG.6B is a view of the piston of FIG.6A, taken outwardly in the radial direction of the cam.
[FIG.7A] FIG.7A is a graph showing a cam profile and a contact load according to an embodiment.
[FIG.7B] FIG.7B is a graph showing the cam profile, a cam/roller friction coefficient and a piston/roller friction coefficient according to an embodiment.

### DETAILED DESCRIPTION

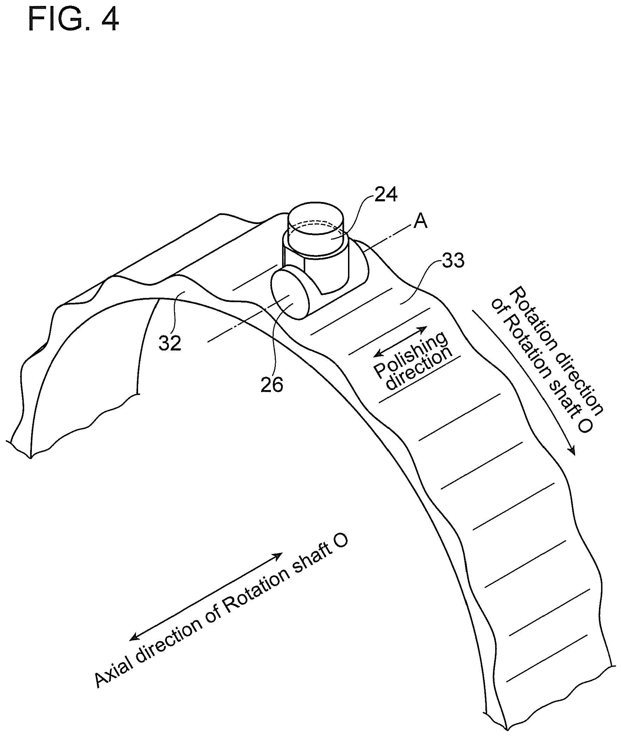

An embodiment of the present invention is that shown in Fig. 4 and will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following embodiments, a wind turbine generator is described as one example of an apparatus to which a hydraulic machine or a hydraulic transmission is applied. The hydraulic machine or the hydraulic transmission of the present invention may, however, be used for other types of renewable energy power generating apparatuses such as a tidal current power generating apparatus, an ocean current power generating apparatus and a river current power generating apparatus. Further, the hydraulic machine or the hydraulic transmission of the present invention may also be applied to other apparatuses such as construction machines and its use is not particularly restricted.

Hereinafter, embodiments regarding a hydraulic machine provided with an outward cam are mainly described. This is, however, not restrictive and the hydraulic machine may be provided with an inward cam. In such case, the embodiments of the present invention may include the case where description regarding the directions mentioned below is reversed appropriately. Moreover, the case where the cam rotates is illustrated. This is, however, not restrictive and the cam may be fixed while the cylinder and the piston are configured to rotate.

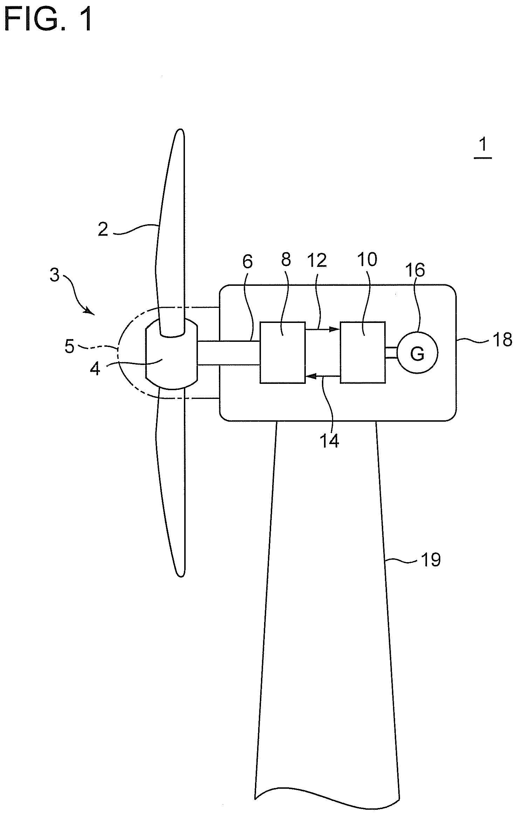

FIG.1 is an illustration of a wind turbine generator according to an embodiment. As illustrated in the drawing, a wind turbine generator 1 is provided with a rotor 3 formed by at least one blade 2 and a hub 4. The hub 4 may be covered by a hub cover (a spinner) 5.

In one embodiment, a hydraulic pump 8 is connected to the rotor 3 via a rotation shaft 6. To the hydraulic pump 8, a hydraulic motor 10 is connected via a high pressure oil line 12 and a low pressure oil line 14. More specifically, an outlet of the hydraulic pump 8 is connected to an inlet of the hydraulic motor 10 via the high pressure oil line 12 while an inlet of the hydraulic pump 8 is connected to an outlet of the hydraulic motor 10 via the low pressure oil line 14. The hydraulic pump 8 is driven by the rotation shaft 6 to pressurize operating oil, thereby generating high pressure operating oil (pressurized oil). The pressurized oil generated by the hydraulic pump 8 is supplied to the hydraulic motor 10 via the high pressure oil line 12 to drive the hydraulic motor 10. The operating oil having performed work in the hydraulic motor 10 becomes low pressure operating oil. The low pressure operating oil is returned to the hydraulic pump 8 via the low pressure oil line 14 provided between the outlet of the hydraulic motor 10 and the inlet of the hydraulic pump 8. In this embodiment, the hydraulic transmission is configured to include the hydraulic pump 8 and the hydraulic motor 10.

A generator 16 is connected to the hydraulic motor 10. In one embodiment, the generator 16 is a synchronous generator which is connected to a grid and configured to be driven by the hydraulic motor 10.

Further, the rotation shaft 6 is at least in part covered by a nacelle 18 installed on a tower 19. In one embodiment, the hydraulic pump 8, the hydraulic motor 10 and the generator 16 are placed in the nacelle 18.

In some embodiments, at least one of the hydraulic pump 8 or the hydraulic motor 10 is a hydraulic machine of a radial piston type, which is described below.

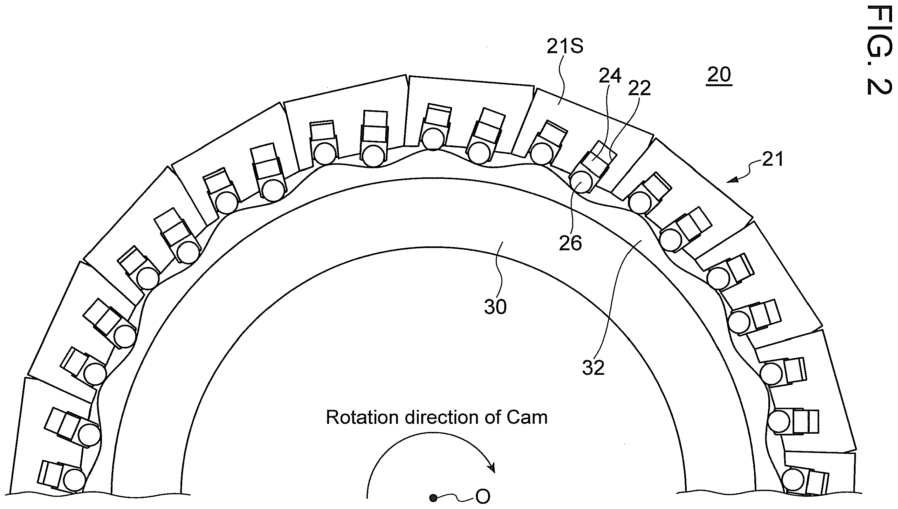

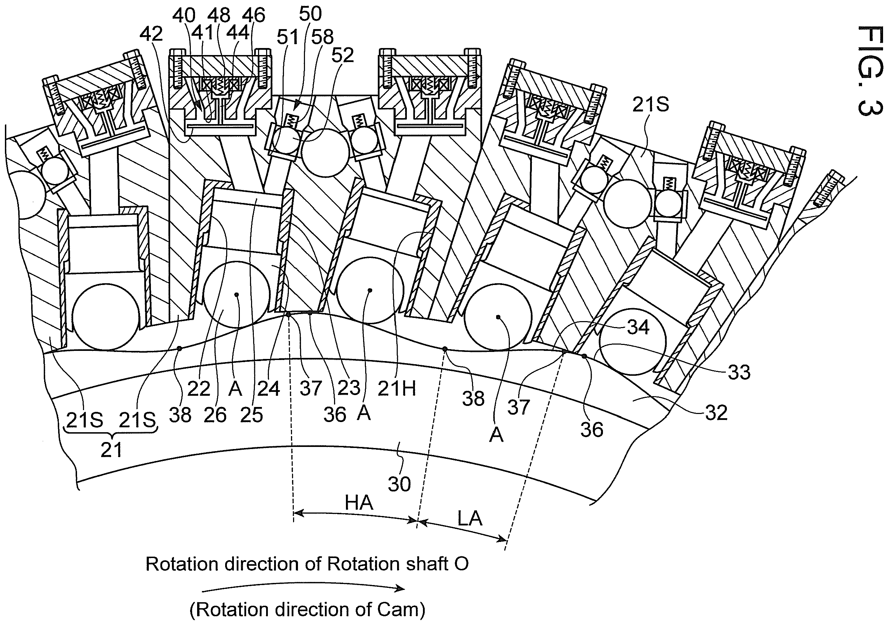

FIG.2 is a cross-sectional view of the hydraulic machine according to an embodiment, taken along a radial direction. FIG.3 is a cross-sectional view of a configuration in the periphery of a cylinder of the hydraulic machine according to an embodiment.

A hydraulic machine illustrated in FIG.2 is provided with a plurality of cylinders 22, a plurality of pistons 24 respectively provided in the plurality of cylinders 22 and a plurality of rollers 26 respectively provided for the plurality of pistons 24. The hydraulic machine 20 is further provided with a rotation shaft 30 and a cam 32 configured to rotate with the rotation shaft 30.

In an embodiment illustrated in FIG.2 and FIG.3, an annular outward cam 32 is provided on an outer circumferential side of the rotation shaft 30. Further, on an outer circumferential side of the outward cam 32, the cylinders 22, the pistons 24 and the rollers 26 are arranged. Herein, the outward cam refers to a cam having a cam surface contacting the rollers 26 on the outer circumferential side of the cam. In another embodiment, an annular inward cam 32 is provided on an inner circumferential side of the rotation shaft 30, and the cylinders 22, the pistons 24 and the rollers 26 are arranged on the inner circumferential side of the inward cam 32. Herein, the inward cam refers to a cam having the cam profile contacting the rollers 26 on the inner circumferential side.

The plurality of cylinders 22 is arranged in a cylinder block 21 in the circumferential direction of the hydraulic machine 20. In one embodiment, as illustrated in FIG.3, the cylinder 22 is formed by a cylinder sleeve 23 inserted in a sleeve hole 21H of the cylinder block 21. In another embodiment, the cylinder 22 is directly formed in the cylinder block 21 without using the cylinder sleeve 23. The cylinder block 21 may be separable into a plurality of segments 21S in the circumferential direction of the hydraulic machine 20.

Each of the pistons 24 is slidably provided in each of the cylinders 22. Each of the pistons 24 is guided by each of the cylinders 22 to reciprocate between a bottom dead center and a top dead center along a center axis of the cylinder 22. In response to the reciprocating motion of the piston 24, volume of a hydraulic chamber 25 surrounded by each of the cylinders 22 and each of the pistons 24 changes cyclically.

The reciprocating motion of the piston 24 which accompanies cyclic volume change of the hydraulic chamber 25 is convertible to a rotational motion of the cam 32, and vice versa.

For instance, in the case where the hydraulic machine 20 is the hydraulic pump 8, the rotational motion of the cam 32 rotating with the rotation shaft 30 of the hydraulic machine 20 is converted into reciprocating motion of the piston 24 and the volume of the hydraulic chamber 25 changes cyclically to generate high pressure operating oil (pressurized oil) in the hydraulic chamber 25. In contrast, in the case where the hydraulic machine 20 is the hydraulic motor 10, the reciprocating motion of the piston 24 in response to feeding of the pressurized oil into the hydraulic chamber 25 and then the reciprocating motion is converted into the rotational motion of the cam 32. As a result, the rotation shaft 30 of the hydraulic machine 20 rotates with the cam 32.

In this manner, with use of the cam 32, the energy is converted between rotational energy (mechanical energy) of the rotation shaft 30 of the hydraulic machine 20 and fluid energy of the operating oil, and hence the hydraulic machine 20 is capable of functioning as the hydraulic pump 8 or the hydraulic motor 10 as desired.

Each of the rollers 26 engages with each of the pistons 24 to freely rotate around a rotation axis of the roller 26. Each of the rollers 26 contacts a cam surface 33 of the cam 32. When the cam 32 rotates with the rotation shaft 30 around the center O of the cam 32 (the center axis of the hydraulic machine 20), each of the rollers 26 travels on the cam surface 33 of the cam 32 while rotating around the rotation axis A of the roller 26.

The cam surface 33 of the cam 32 is formed by a plurality of lobes 34 disposed along the circumferential direction of the hydraulic machine 20. Each of the lobes 34 projects toward the cylinder 22. Each of the lobes 34 is formed by a smooth curve passing through a pair of bottom points 38 and one vertex point 36 disposed between the pair of bottom points 38. The vertex point 36 and the bottom point 38 of the lobe 34 are points on the cam surface 33 at which the distance from the rotation axis O of the hydraulic machine 20 is the largest or the smallest. The vertex point 36 is disposed nearer to the cylinder 22 than the bottom point 38. The vertex point 36 of the lobe 34 is a point on the cam surface 33 corresponding to a top dead center in a cycle of reciprocating motion of the piston 24. In contrast, the bottom point 38 of the lobe 34 is a point on the cam surface 33 corresponding to a bottom dead center in the cycle of reciprocating motion of the piston 24.

In the embodiment illustrated in FIG.2 and FIG.3, the cylinders 22 are arranged on the outer circumferential side of the outward cam 32, and the distance (a cam diameter) from the center axis O of the cam 32 (the rotation axis of the hydraulic machine 20) is the largest at the vertex point 36 of the lobe 34 while the distance (the cam diameter) from the center axis O is the smallest at the bottom point 38 of the lobe 34. In another embodiment where the cylinders 22 are arranged on the inner circumferential side of the inward cam, the distance from the center axis O to the cam surface 33 is the smallest at the vertex point 36 of the lobe 34 and the distance from the center axis O to the cam surface 33 is the greatest at the bottom point 38 of the lobe 34. Further, at the vertex point 36 and the bottom point 38 of each of the lobes 34, a normal line to the cam surface 33 coincides with the radial direction of the hydraulic machine 20.

In some embodiments, as illustrated in FIG.3, the hydraulic machine 30 is further provided with a low pressure valve 40 provided between each of the hydraulic chambers 25 and the low pressure oil line 14, and a high pressure valve 50 provided between each of the hydraulic chambers 25 and the high pressure oil line 12. In the case where the hydraulic machine 20 is a hydraulic pump, the low pressure valve 40 is used for supplying the low pressure operating oil to the hydraulic chamber 25 from the low pressure oil line 14 and the high pressure valve 50 is used for supplying the high pressure operating oil generated in the hydraulic chamber 25 to the high pressure line 12.

The low pressure valve 40, as illustrated in FIG.3, may be a normal open solenoid valve including a first seat 41, a first valve element 42 configured to contact the first seat 41, a first stem 44 coupled to the first valve element 42, a solenoid 46 configured to generate magnetic force for driving the first stem 44, and a first biasing member 48 for biasing the first valve element 42 to a side opposite to the first seat 41. In this case, by energizing the solenoid 46, the first stem 44 moves against a biasing force of the first biasing member 48 by a magnetic force of the solenoid 46, the first valve element 42 contacts the first valve seat 41, and the low pressure valve 40 is closed. Further, by de-energizing the solenoid 46, the first stem 44 moves and the first valve element 42 moves away from the first seat 41 by the biasing force of the first biasing member 48, and the low pressure valve 40 is opened. The first valve element 42 may be a face-sealing poppet valve element.

In contrast, in the case where the hydraulic machine 20 is the hydraulic pump, the high pressure valve 50 may be a check valve, as illustrated in FIG.3, including a second seat 51, a second valve element 52 contactable with the second seat 51 and a second biasing member 58 for biasing the second valve element 52 toward the second seat 51. In this case, when the pressure in the hydraulic chamber 25 rises and a pressure difference between two sides of the second valve element 52 exceeds the biasing force of the second biasing member 58, the pressure difference causes the second valve element 52 to move away from the second seat 51, and the high pressure valve 50 is opened. If the pressure difference between two sides of the second valve element 52 is smaller than the biasing force of the second biasing member 58, the second valve element 52 contacts the second seat 51 by the biasing force of the second biasing member 58, and the high pressure valve 50 is closed. The second valve element 52 may be a spherical valve element as illustrated in FIG.3.

FIG.4 is an oblique view of the cam, illustrating a polishing direction of the cam surface according to the invention.

As illustrated in the drawing, in this embodiment, the polishing direction of the cam surface 33 of the cam 32 is different from the rotation direction of the rotation shaft O of the hydraulic machine 20. Herein, polishing includes one of or combination of at least two of mechanical polishing, chemical polishing or electrical polishing.

In FIG.4, the polishing direction of the cam surface 33 is along the rotation shaft O of the hydraulic machine 20 as one example. Further, "the polishing direction of the cam surface 33 is different from the rotation direction of the rotation shaft O" means that the polishing direction does not include a direction which coincides with the rotation direction of the rotation shaft O, and also includes the case where there is not one or more particular directions recognized as a polishing direction (the case where the polishing direction of the cam surface possesses isotropy). For instance, in the case where the cam 32 is mechanically polished, the cam 32 undergoes grinding using a grinding material to be formed into shape, and then the cam surface 33 undergoes polishing which includes rough-polishing and final polishing (e.g. buff polishing) using a polishing material. In the polishing step, the rotating polishing material is placed against the cam surface 33 to smooth the cam surface 33. In this process, the polishing direction (the rotation direction of the polishing material) is set different from the rotation direction of the rotation shaft O. In the case of performing more than one polishing step including the rough-polishing and final polishing, in at least one of the polishing steps, the polishing material is moved in the above described direction so that minute grooves formed on the cam surface 33 by polishing are ultimately in the direction different from the rotation direction of the rotation shaft O. Alternatively, in the case of polishing the cam surface 33 to the extent that the minute grooves formed on the cam surface 33 in the grinding step still remain, an operating direction of the grinding material may be set different from the rotation direction of the rotation shaft O. Moreover, in the case of superfinishing the cam surface 33 in the final polishing step, the cam surface 33 may undergo treatment such as chemical solution and power spraying. When in the superfinishing step, the cam surface 33 is polished to a surface roughness Ra of not greater than 0.06, for the purpose of maintaining an oil film of sufficient thickness on the cam surface 33, dimples are formed on the cam surface 33, or the cam surface 33 may possess isotropy as described later in details and in the superfinishing, regular polishing may, of course, be performed.

For instance, in the case where the polishing direction of the cam surface 33 coincides with the rotation direction of the rotation shaft O, the direction of the minute groves formed by polishing coincides with a rolling direction of the roller 26 with respect to the cam surface 33. Thus, when the roller 26 rolls over the cam surface 33, lubricating oil leaks along the minute grooves formed by polishing, which makes it difficult to retain the oil film of sufficient thickness in a contact part of the cam surface 33 and the roller 26. Therefore, by setting the polishing direction of the cam surface 33 different from the rotation direction of the rotation shaft O, the lubricating oil is retained in the minute grooves, thereby maintaining the oil film on the cam surface 33 and keeping favorable lubricity between the cam surface 33 and the roller 26. As a result, the deterioration of the cam surface can be reduced and the life of the cam 32 can be improved.

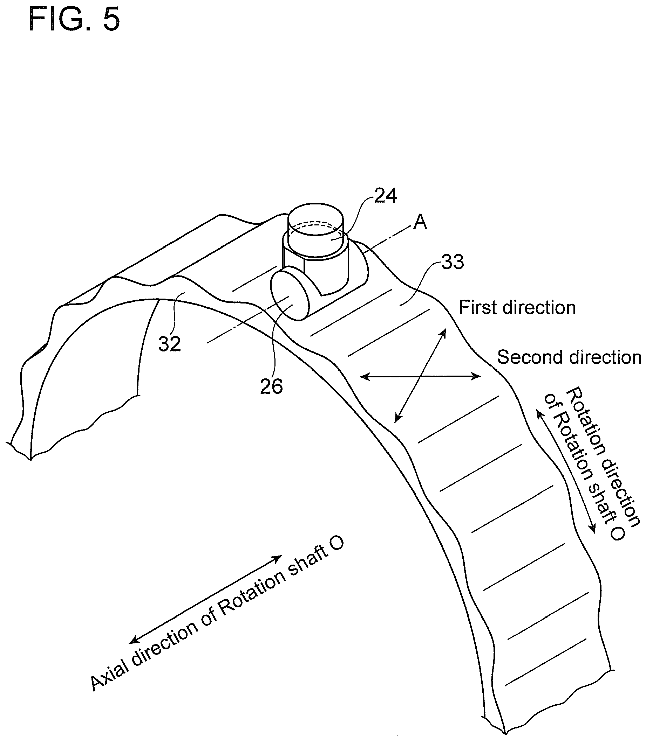

FIG.5 is an oblique view of the cam illustrating a polishing direction of the cam surface according to the invention.

As illustrated in the drawing, in another embodiment, the polishing direction of the cam surface 33 of the cam 32 includes a first direction which is oblique to the rotation shaft O of the hydraulic machine 20 and a second direction which intersects the first direction and is oblique to the rotation shaft O. As a result, the oil film can be reliably formed on the contact part of the cam surface 33 and the roller 26, and the lubricity between the cam 32 and the roller 26 can be favorably maintained.

The polishing direction of the cam surface 33 of the cam 32 may possess isotropy. For instance, the cam surface 33 is immersed in solution for smoothing treatment in which the cam surface 33 is dissolved by chemical reaction. As a result, the cam surface 33 which possesses isotropy without a particular polishing direction can be obtained.

In this manner, by configuring the cam 32 so that the polishing direction of the cam surface 33 possesses isotropy, the oil film can be reliably formed on the contact part of the cam surface 33 and the roller 26 and the lubricity between the cam 32 and the roller 26 can be favorably maintained.

Further, a plurality of dimples may be formed on the cam surface 33 of the cam 32. For instance, after forming the minute groove in the direction different from the rotation direction of the rotation shaft O by rough-polishing, the surface of the cam surface 33 may be shaved by final polishing to form the dimples thereon.

As a result, the lubricating oil can be retained in the plurality of dimples formed on the cam surface 33, the oil film can be reliably formed on the contact part of the cam surface 33 and the roller 26, and the lubricity between the cam 32 and the roller 26 can be favorably maintained.

In some embodiments, the cam surface 33 of the cam 32 has a Brinell hardness of not less than 600.

In one embodiment, the cam surface 33 of the cam 32 has a Brinell hardness of not greater than 800.

As a result, it is possible to achieve the configuration in which the cam surface 33 is not damaged easily, and hence it is possible to further improve the life of the cam 32.

The cam surface 33 has the surface roughness Ra of not less than 0.1 and not greater than 0.3. The surface roughness is arithmetical mean deviation specified in JIS B0601.

By setting the surface roughness Ra of the cam surface 33 to be not less than 0.1 and not greater than 0.3, the lubricity between the cam 32 and the roller 26 can be favorably maintained while retaining the lubricating oil of sufficient thickness on the cam surface 33 to maintain seizure resistance.

The hydraulic machine 20 is configured so that the piston 24 is caused to reciprocate in the cylinder 22 when the roller 26 rolls on the cam surface 33. However, the roller 26 sometimes skids on the cam surface 33. This could result in seizure or smearing.

Therefore, in some embodiments, a friction coefficient between the roller 26 and the cam surface 33 is set larger than a friction coefficient between the roller 26 and the piston 24 so that skidding does not occur between the cam surface 33 and the roller 26. As a result, the roller 26 smoothly rolls on the cam surface 33 without skidding, and thus it is possible to prevent occurrence of failure such as seizure and smearing. Therefore, the life of the cam 32 can be further enhanced.

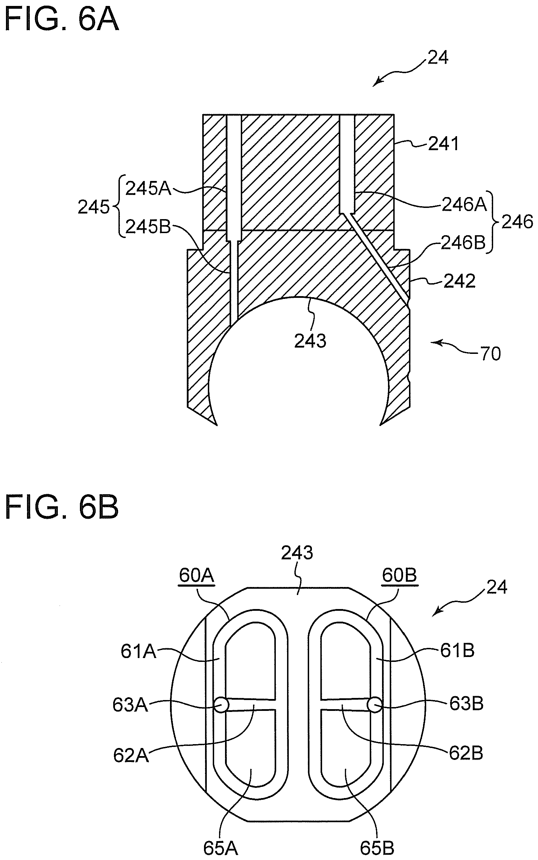

In one embodiment, as illustrated in FIG.6A and FIG.6B, the piston 24 is configured so that a hydrostatic bearing is formed on a roller sliding surface 243 of the piston 24. The hydrostatic bearing operates by supplying the operating oil in the hydraulic chamber 25 to hydrostatic pads 60A, 60B provided on the roller sliding surface 243 of the piston 24. The configuration of the hydrostatic bearing is described later in details.

When the pressure of the operating oil in the hydraulic chamber 25 is high, load capacity of the hydrostatic pads 60A, 60B is high and thus, the roller sliding surface 243 and the roller 26 are in fluid lubrication state. Therefore, the friction coefficient between the roller 26 and the roller sliding surface 243 becomes significantly low. Between the cam surface 33 and the roller 26, the lubricating oil is present but the hydrostatic bearing is not provided. Thus, when the roller sliding surface 243 and the roller 26 are in fluid lubrication state, the friction coefficient between the roller 26 and the cam surface 33 is normally larger than the friction coefficient between the roller 26 and the roller sliding surface via the hydrostatic bearings. To allow smooth rolling of the roller 26 on the cam surface 33, it is necessary that the roller sliding surface 243 of the piston 24 and the outer periphery of the roller 26 slide smoothly. Therefore, when the roller sliding surface 243 and the roller 26 are in fluid lubrication state, the roller 26 can roll on the cam surface 33 smoothly.

In contrast, when the pressure of the operating oil in the hydraulic chamber 25 is low, the load capacity of the hydrostatic pads 60A, 60B declines and thus, the roller sliding surface 243 and the roller 26 become close to boundary lubrication. In this case, if the friction coefficient between the roller 26 and the piston 24 exceeds the friction coefficient between the roller 26 and the cam 32, the roller 26 may not slide smoothly on the roller sliding surface 243 of the piston 24. This can cause skidding of the roller 26 on the cam surface 33 side.

Therefore, as described above, even in the case where the piston 24 has the hydrostatic bearing, by setting the friction coefficient between the roller 26 and the cam surface 33 larger than the friction coefficient between the roller 26 and the piston 24, the roller 26 can roll smoothly without skidding on the cam surface 33 even in the low pressure region LA, and it is possible to prevent occurrence of failure such as seizure and smearing.

The hydrostatic bearing of the piston is now described in details.

The piston 24 illustrated in FIG.6A is configured to include a hydraulic-chamber forming part 241 and a roller holding part 242. The hydraulic-chamber forming part 241 is configured to reciprocate in the cylinder 22. The hydraulic-chamber forming part 241 forms the hydraulic chamber 25 together with the cylinder 22. Meanwhile, the roller holding part 242 holds the roller 26 rotatably and includes the roller sliding surface 243 which engages with the roller 26. The roller sliding surface 243 is formed as a curved surface with a curvature approximately equal to or slightly greater than that of the roller 26 to fit the outer periphery of the roller 26. The roller sliding surface 243 is arranged to partially surround the outer periphery of the roller 26. The piston 24 is configured to reciprocate in the cylinder 22 upon receiving a pressing force from the cam 32 via the roller 26. For the purpose of maintaining durability to withstand the pressing force from the cam 32, the roller holding part 242 may be formed with larger diameter than the hydraulic-chamber forming part 241.

In the piston 24, an inner passage 245 where the operating oil flows from the hydraulic chamber 25 is formed. More than one inner passage 245 may be formed in the piston 24. For instance, as illustrated in FIG.6A, two inner passages 245 are provided in the width direction of the roller 26 (in the depth direction of the drawing sheet). This inner passage 245 includes a passage portion 245A opening to the hydraulic chamber 25 at one end and being formed to penetrate the hydraulic-chamber forming part 241 in the axial direction of the piston 24 and a passage portion 245B communicating with the passage portion 245A at one end, penetrating the roller holding part 242 and opening to the roller sliding surface 243 at the other end. In the inner passage 245, an orifice for regulating the flow of the operating oil supplied from the hydraulic chamber 25 may be provided.

As illustrated in FIG.6B, at least one hydrostatic pad 60A, 60B is provided on the roller sliding surface 243 of the piston 24. The hydrostatic pad 60A, 60B includes an annular groove 61A, 61B communicating with the hydraulic chamber 25 via the inner passage 245 formed in the piston 24 and a land 65A, 65B surrounded by the annular groove 61A, 61B. In the drawing, illustrated as one example is the case where a communication groove 62A, 62B is formed along the rotation direction of the roller 26 to transverse the annular groove 61A, 61B. Thus, two lands 65A, 65B are provided inside each annular groove 61A, 61B. Further, the inner passage 245 communicates with supply ports 63A, 63B respectively provided on the communication grooves 62A, 62B. The operating oil is supplied from the hydraulic chamber 25 to the communication grooves 62A, 62B of the grooves 60A, 60B via the inner passage 245. Then, the operating oil supplied from the inner passage 245 is led to different parts of the annular grooves 61A, 61B via the communication grooves 62A, 62B.

With the above configuration, the hydrostatic bearing is formed on the roller sliding surface 243 of the piston 24. More specifically, when the roller 26 rotates, the operating oil in the annular grooves 61A, 61B and the communication grooves 62A, 62B is drawn to the roller sliding surface, thereby generating static pressure by a hydraulic pressure. This hydrostatic pressure supports the large load applied to the roller 26 from the cam 32. Then, for the amount of the operating oil drawn to the engagement surface 30 from the annular grooves 61A, 61B and the communication grooves 62A, 62B, the operating oil is replenished to the hydrostatic pads 60A, 60B so as to constantly obtain the hydrostatic pressure by the hydraulic pressure.

Further, the piston 24 may be provided with a hydrostatic pad 70 on a sliding surface of the piston 24 against the cylinder 22. In this case, as illustrated in FIG.6A, the inner passage 246 where the operating oil flows from the hydraulic chamber 25 is provided in the piston 24. This inner passage 246 includes a passage portion 246A opening to the hydraulic chamber 25 at one end and being formed to penetrate the hydraulic-chamber forming part 241 in the axial direction of the piston 24 and a passage portion 246B communicating with the passage portion 246A at one end, penetrating the roller holding part 242 and opening at the other end to the surface of the piston 24 sliding against the inner periphery of the cylinder 22. On the surface of the piston 24 sliding against the inner periphery of the cylinder 22, a hydrostatic pad 70 including an annular groove may be provided in the same manner as FIG.6B, and the operating oil is supplied to the hydrostatic pad 70 from the hydraulic chamber 25 via the inner passage 246. The hydrostatic bearing is formed in this manner between the inner periphery of the cylinder 22 and the outer periphery of the piston 24.

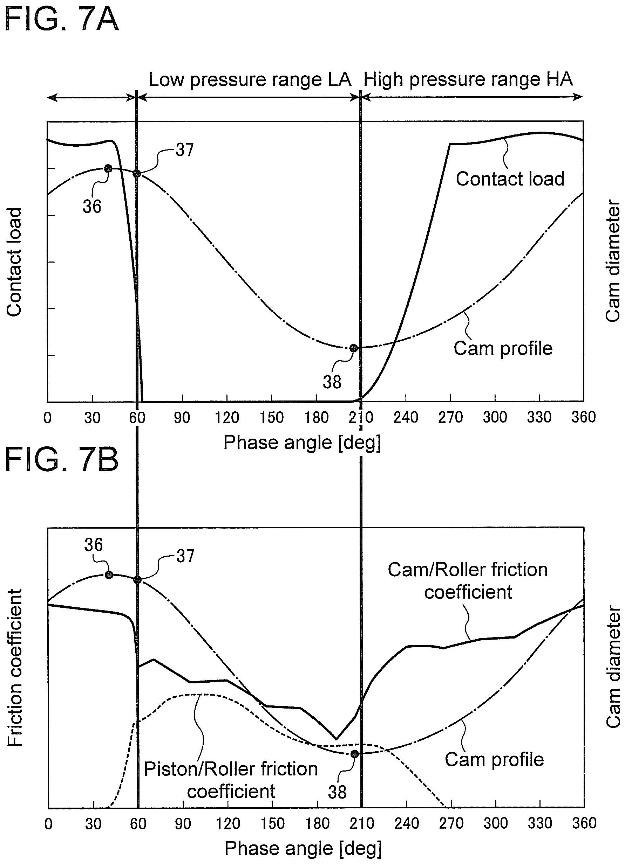

As illustrated in FIG.3, FIG.7A and FIG.7B, in one embodiment, on the cam surface 33, there are a the high pressure region HA having a high contact load between the cam 32 and the roller 26 and the low pressure region LA having a low contact load between the cam 32 and the roller 26. FIG.7A is a graph showing a cam profile and the contact load according to an embodiment. FIG.7B is a graph showing the cam profile, a friction coefficient between the roller and the cam and a friction coefficient between the roller and the piston according to an embodiment.

In the case where the hydraulic machine 20 is the hydraulic pump, when the piston 24 is at the top dead center, the roller 26 is at the vertex point 36 of the cam surface 33. In the cam profile illustrated in FIG.7A and FIG.7B, the vertex point 36 is a point on the cam surface 33 at which the cam diameter is the largest. In contrast, when the piston 24 is at the bottom dead center, the roller 26 is at the bottom point 38 of the cam surface 33. In the cam profile illustrated in FIG.7A and FIG.7B, the bottom point 38 is a point on the cam surface 33 at which the cam diameter is the smallest. Basically, while the piston 24 travels from the bottom dead center toward the top dead center, i.e. while the roller 26 is in the high pressure region HA of the cam surface 33, the pressure of the operating oil is high in the hydraulic chamber 25. In contrast, while the roller 26 is in the low pressure region LA of the cam surface 33, the pressure of the operating oil is low in the hydraulic chamber 25. In the case where the hydraulic machine 20 is the hydraulic pump, basically as illustrated in FIG.3, the high pressure region HA is on a downstream side of each lob 34 with respect to the vertex point 36 in the rotation direction of the cam 32, whereas the low pressure region LA is on an upstream side of each lobe 34 with respect to the vertex point 36 in the rotation direction of the cam 32. In relation to an opening/closing timing of the high pressure valve 50 or the low pressure valve, etc., the high pressure region HA and the low pressure region LA may be defined with respect to a boundary point 37 which is displaced from the vertex point 36 toward the downstream side in a traveling direction of the roller 26 on the cam surface 33.

In the case where the hydraulic machine 20 is the hydraulic motor, when the piston 24 is at a position in the high pressure region HA of the cam surface 33, basically the piston 24 is traveling from the top dead center toward the bottom dead center and the pressure of the operating oil in the hydraulic chamber 25 is high. In contrast, when the piston 24 is at a position in the low pressure region LA of the cam surface 33, basically the roller 26 is traveling from the bottom dead center toward the top dead center and the pressure of the operating oil in the hydraulic chamber 25 is low. Further, in the case where the hydraulic machine 20 is the hydraulic motor, basically, the high pressure region HA is on the upstream side of each lob 34 with respect to the vertex point 36 in the rotation direction of the cam 32, whereas the low pressure region LA is on the downstream side of each lobe 34 with respect to the vertex point 36 in the rotation direction of the cam 32.

In one embodiment according to the invention, the low pressure region LA of the cam surface 33 has a surface roughness Ra which is greater than that of the high pressure region HA. In the case where the sliding part between the piston 24 and the roller 26 is lubricated with the operating oil from the hydraulic chamber 25, while the roller 26 is in the high pressure region HA of the cam surface 33, the operating oil is positively supplied to the sliding part between the piston 24 and the roller 26, thereby significantly reducing the friction coefficient between the roller 26 and the piston 24. In contrast, while the roller 26 is in the low pressure region LA of the cam surface 33, the operating oil pressure is low in the hydraulic chamber 25 and thus the operating oil is not sufficiently supplied to the sliding part between the piston 24 and the roller 26. Hence, the friction coefficient between the roller 26 and the piston 24 is still large. Therefore, compared to the case when the roller 26 is at a position in the high pressure region HA of the cam surface 33, skidding is likely to occur between the roller 26 and the cam surface 33 when the roller 26 is at a position in the low pressure region LA of the cam surface 33.

Therefore, the surface roughness Ra of the low pressure region LA is set greater than that of the high pressure region HA. In this case, the friction coefficient of each region is set as illustrated in FIG.7B. More specifically, the friction coefficient between the cam 32 and the roller 26 (cam-roller friction coefficient in FIG.7B) in the high pressure region HA is originally set larger than the friction coefficient between the cam 32 and the roller 26 in the low pressure region LA, corresponding to the high contact load between the cam 32 and the roller 26. In this case, the friction coefficient between the roller 26 and the piston 24 (piston-roller friction coefficient in FIG.7B) become significantly small as the hydrostatic bearing functions properly. As a result, the friction coefficient between the cam 32 and the roller 26 is larger than the friction coefficient between the piston 24 and the roller 26 and hence, the roller 26 smoothly rolls on the cam surface 33.

In contrast, in the low pressure region LA, the contact load between the cam 32 and the roller 26 decreases. However, the surface roughness Ra of the cam surface 33 in the low pressure region LA is set greater than the high pressure region HA and thus, the friction coefficient between the cam 32 and the roller 26 increases. As a result, even if the hydrostatic bearing of the piston 24 does not function properly, the friction coefficient between the cam 32 and the roller 26 is larger than the friction coefficient between the piston 24 and the roller 26 and hence, the roller 26 can still roll smoothly on the cam surface 33 even in the low pressure region LA.

With the above configuration, it is possible to maintain the sufficiently large friction coefficient between the roller 26 and the cam surface 33 (the low pressure region LA) and to prevent skidding between the roller 26 and the cam surface 33, which is likely to occur when the roller 26 is in the low pressure region LA of the cam surface 33. This improves the durability against smearing, seizure, etc. which is caused by skidding. By selectively reducing the surface roughness in the high pressure region HA with distribution in the surface roughness Ra of the cam surface 22, in comparison to the case where the surface roughness is uniform throughout the cam surface 33, it is possible to avoid excessive designing, to prevent size increase of the hydraulic machine 20, and to improve reliability of the hydraulic machine 20.

As described above, according to the above embodiments, by making the polishing direction of the cam surface 33 different from the rotation direction of the rotation shaft O, the lubricating oil is retained in the minute grooves formed on the cam surface 33 by polishing, thereby making it possible to retain the oil film on the cam surface 33 and to keep favorable lubricity between the cam surface 33 and the roller 26. As a result, the deterioration of the cam surface 33 can be suppressed and the life of the cam 32 can be improved.

The invention is defined in the claims.

### [Reference Signs list]

- 1: Wind turbine generator
- 2: Blade
- 3: Rotor
- 4: Hub
- 5: Hub cover
- 6: Rotation shaft
- 8: Hydraulic pump
- 10: Hydraulic motor
- 12: High pressure oil line
- 14: Low pressure oil line
- 16: Generator
- 18: Nacelle
- 19: Tower
- 20: Hydraulic machine
- 21: Cylinder block
- 21S: Segment
- 21H: Sleeve hole
- 22: Cylinder
- 23: Cylinder sleeve
- 24: Piston
- 25: Hydraulic chamber
- 26: Roller
- 30: Rotation shaft
- 32: Cam
- 33: Cam surface
- 34: Lobe
- 36: Vortex point
- 38: Bottom point
- 40: Low pressure valve
- 41: First seat
- 42: First valve element
- 44: First stem
- 46: Solenoid
- 48: First biasing member
- 50: High pressure valve
- 51: Second seat
- 52: Second valve element
- 58: Second biasing member
- 60A, 60B: Hydrostatic pad
- 61A, 61B: Annular groove
- 62A, 62B: Communication groove
- 63A, 63B: Supply port
- 65A, 65B: Land
- 241: Hydraulic-chamber forming part
- 242: Roller holding part
- 243: Roller sliding surface
- 245, 246: Inner passage

## Claims

1. A hydraulic machine (20) of a radial piston type, comprising:
a plurality of pistons (24) arranged along a radial direction of the hydraulic machine (20);
a plurality of rollers (26) provided rotatably for the plurality of pistons (24), respectively; and
a cam (32) having a cam surface (33) contacting the plurality of rollers (26) and configured to rotate with a rotation shaft (30) around a rotation axis of the rotation shaft (30) of the hydraulic machine (20) for a relative movement among the plurality of rollers (26) and the cam (32);
**characterized in that** a polishing direction of the cam surface (33) is a direction along the rotation axis, or includes a first direction which is oblique to the rotation axis and a second direction which intersects the first direction and is oblique to the rotation axis, wherein the cam surface (33) has a surface roughness Ra of not less than 0.1 and not greater than 0.3, the surface roughness being arithmetical mean deviation specified in JIS B0601,
wherein the cam (32) includes a high pressure region of the cam surface (33) and a low pressure region of the cam surface (33), the high pressure region contacting the roller (26) corresponding to a hydraulic chamber (25) surrounded by the piston (24) and the cylinder (22) and undergoing pressure increase in the hydraulic chamber (25) in a reciprocation cycle of the piston (24) reciprocating in the cylinder (22), the low pressure region contacting the roller (26) corresponding to a hydraulic chamber (25) surrounded by the piston (24) and the cylinder (22) and undergoing pressure decrease in the hydraulic chamber (25) in the reciprocation cycle, and
wherein the low pressure region has a surface roughness Ra which is greater than that of the high pressure region.

2. The hydraulic machine (20) of a radial piston type according to claim 1,
wherein a friction coefficient between the roller (26) and the cam surface (33) is set larger than a friction coefficient between the roller (26) and the piston (24) so that skidding does not occur between the cam surface (33) and the roller (26).

3. The hydraulic machine (20) of a radial piston type according to claim 1 or 2,
wherein a plurality of dimples is formed on the cam surface (33).

4. The hydraulic machine (20) of a radial piston type according to any one of claims 1 to 3,
wherein the cam surface (33) has a Brinell hardness of not less than 600.

5. The hydraulic machine (20) of a radial piston type according to claim 4,
wherein the cam surface (33) has a Brinell hardness of not greater than 800.

6. A hydraulic transmission comprising:
a hydraulic pump (8) configured to be driven by rotation of a rotation shaft (6); and
a hydraulic motor (10) configured to be driven by pressurized oil generated by the hydraulic pump (8),
**characterized in that** at least one of the hydraulic pump (8) or the hydraulic motor (10) is a hydraulic machine (20) of a radial piston type according to any of claims 1 to 5.

7. A wind turbine generator (1) comprising:
at least one blade (2);
a hub (4) on which the at least one blade (2) is mounted;
a hydraulic pump (8) configured to be driven by rotation of the hub (4);
a hydraulic motor (10) configured to be driven by pressurized oil generated by the hydraulic pump (8); and
a generator (16) configured to be driven by the hydraulic motor (10),
**characterized in that** at least one of the hydraulic pump (8) or the hydraulic motor (10) is a hydraulic machine (20) of a radial piston type according to any of claims 1 to 5.

## Patentansprüche

1. Hydraulische Maschine (20) vom Radialkolbentyp, umfassend:
mehrere Kolben (24), die entlang einer radialen Richtung der hydraulischen Maschine (20) angeordnet sind,
mehrere Rollen (26), die jeweils drehbar für die mehreren Kolben (24) bereitgestellt sind, und
einen Nocken (32), der eine Nockenfläche (33) aufweist, die die mehreren Rollen (26) berührt, und dafür konfiguriert ist, sich mit einer Drehwelle (30) um eine Drehachse der Drehwelle (30) der hydraulischen Maschine (20) herum zudrehen, um eine Relativbewegung zwischen den mehreren Rollen (26) und dem Nocken (32) zu erzeugen,
**dadurch gekennzeichnet, dass** eine Polierrichtung der Nockenfläche (33) eine Richtung entlang der Drehachse ist, oder eine erste Richtung, die schräg zur Drehachse verläuft, und eine zweite Richtung, die die erste Richtung schneidet und schräg zur Drehachse verläuft, enthält, wobei die Nockenfläche (33) eine Oberflächenrauigkeit Ra von nicht weniger als 0,1 und nicht größer als 0,3 aufweist, wobei die Oberflächenrauigkeit eine arithmetische mittlere Abweichung gemäß Spezifikation in JIS B0601 ist,
wobei der Nocken (32) eine Hochdruckregion der Nockenfläche (33) und eine Niederdruckregion der Nockenfläche (33) enthält, wobei die Hochdruckregion, welche die Rolle (26) berührt, einer Hydraulikkammer (25) entspricht, die von dem Kolben (24) und dem Zylinder (22) umgeben wird und in der es bei einem Hubtakt des Kolbens (24), der in dem Zylinder (22) eine Hubbewegung vollführt, zu einem Druckanstieg kommt, wobei die Niederdruckregion, welche die Rolle (26) berührt, einer Hydraulikkammer (25) entspricht, die von dem Kolben (24) und dem Zylinder (22) umgeben wird und in der es bei dem Hubtakt zu einer Druckverringerung kommt, und
wobei die Niederdruckregion eine Oberflächenrauigkeit Ra hat, die größer ist als die der Hochdruckregion.

2. Hydraulische Maschine (20) vom Radialkolbentyp nach Anspruch 1,
wobei ein Reibungskoeffizient zwischen der Rolle (26) und der Nockenfläche (33) auf einen größeren Wert eingestellt ist als ein Reibungskoeffizient zwischen der Rolle (26) und dem Kolben (24), so dass es zu keinem Schlupf zwischen der Nockenfläche (33) und der Rolle (26) kommt.

3. Hydraulische Maschine (20) vom Radialkolbentyp nach Anspruch 1 oder 2, wobei mehrere Grübchen auf der Nockenfläche (33) ausgebildet sind.

4. Hydraulische Maschine (20) vom Radialkolbentyp nach einem der Ansprüche 1 bis 3,
wobei die Nockenfläche (33) eine Brinell-Härte von nicht weniger als 600 hat.

5. Hydraulische Maschine (20) vom Radialkolbentyp nach Anspruch 4,
wobei die Nockenfläche (33) eine Brinell-Härte von nicht größer als 800 hat.

6. Hydraulisches Getriebe, umfassend:
eine Hydraulikpumpe (8), die dafür konfiguriert ist, durch die Rotation einer Drehwelle (6) angetrieben zu werden, und
einen hydraulischen Motor (10), der dafür konfiguriert ist, durch druckbeaufschlagtes Öl, das durch die Hydraulikpumpe (8) erzeugt wird, angetrieben zu werden,
**dadurch gekennzeichnet, dass** die Hydraulikpumpe (8) und/oder der hydraulische Motor (10) eine hydraulische Maschine (20) vom Radialkolbentyp nach einem der Ansprüche 1 bis 5 ist.

7. Windgenerator (1), umfassend:
mindestens einen Flügel (2),
eine Nabe (4), an der der mindestens eine Flügel (2) montiert ist,
eine Hydraulikpumpe (8), die dafür konfiguriert ist, durch Rotation der Nabe (4) angetrieben zu werden,
einen hydraulischen Motor (10), der dafür konfiguriert ist, durch druckbeaufschlagtes Öl, das durch die Hydraulikpumpe (8) erzeugt wird, angetrieben zu werden, und
einen Generator (16), der dafür konfiguriert ist, durch den hydraulischen Motor (10) angetrieben zu werden,
**dadurch gekennzeichnet, dass** die Hydraulikpumpe (8) und/oder der hydraulische Motor (10) eine hydraulische Maschine (20) vom Radialkolbentyp nach einem der Ansprüche 1 bis 5 ist.

## Revendications

1. Machine hydraulique (20) du type à piston radial, comportant :
une pluralité de pistons (24) disposée le long d'une direction radiale de la machine hydraulique (20) ;
une pluralité de rouleaux (26) prévue de manière rotative pour la pluralité de pistons (24), respectivement ; et
une came (32) ayant une surface de came (33) qui est en contact avec la pluralité de rouleaux (26) et configurée pour tourner avec un arbre de rotation (30) autour d'un axe de rotation de l'arbre de rotation (30) de la machine hydraulique (20) pour un mouvement relatif parmi la pluralité de rouleaux (26) et la came (32) ;
**caractérisée en ce qu'**une direction de polissage de la surface de came (33) est une direction le long de l'axe de rotation, ou bien comprend une première direction qui est oblique par rapport à l'axe de rotation et une deuxième direction qui coupe la première direction et est oblique par rapport à l'axe de rotation, la surface de came (33) a une rugosité Ra de pas moins de 0,1 et pas plus grande que 0,3, la rugosité étant un écart moyen arithmétique spécifié dans la norme JIS B0601,
dans laquelle la came (32) comprend une zone à haute pression de la surface de came (33) et une zone à basse pression de la surface de came (33), la zone à haute pression étant en contact avec le rouleau (26) correspondant à une chambre hydraulique (25) entourée par le piston (24) et le cylindre (22) et subissant une augmentation de pression dans la chambre hydraulique (25) dans un cycle de va-et-vient du piston (24) se déplaçant en va-et-vient dans le cylindre (22), la zone à basse pression étant en contact avec le rouleau (26) correspondant à une chambre hydraulique (25) entourée par le piston (24) et le cylindre (22) et subissant une diminution de pression dans la chambre hydraulique (25) dans le cycle de va-et-vient, et
dans laquelle la zone à basse pression a une rugosité Ra qui est plus grande que celle de la zone à haute pression.

2. Machine hydraulique (20) du type à piston radial selon la revendication 1,
dans laquelle un coefficient de friction entre le rouleau (26) et la surface de came (33) est établi plus grand qu'un coefficient de friction entre le rouleau (26) et le piston (24) de telle sorte qu'un dérapage ne se produit pas entre la surface de came (33) et le rouleau (26).

3. Machine hydraulique (20) du type à piston radial selon la revendication 1 ou 2, dans laquelle une pluralité de bossages est formée sur la surface de came (33).

4. Machine hydraulique (20) du type à piston radial selon l'une quelconque des revendications 1 à 3,
dans laquelle la surface de came (33) a une dureté Brinell de pas moins de 600.

5. Machine hydraulique (20) du type à piston radial selon la revendication 4,
dans laquelle la surface de came (33) a une dureté Brinell de pas plus de 800.

6. Transmission hydraulique comportant :
une pompe hydraulique (8) configurée pour être entraînée par une rotation d'un arbre de rotation (6) ; et
un moteur hydraulique (10) configuré pour être entraîné par de l'huile sous pression générée par la pompe hydraulique (8),
**caractérisée en ce que** au moins un de la pompe hydraulique (8) ou du moteur hydraulique (10) est une machine hydraulique (20) du type à piston radial selon l'une quelconque des revendications 1 à 5.

7. Eolienne (1) comportant :
au moins une pale (2) ;
un moyeu (4) sur lequel la au moins une pale (2) est montée ;
une pompe hydraulique (8) configurée pour être entraînée par une rotation du moyeu (4) ;
un moteur hydraulique (10) configuré pour être entraîné par de l'huile sous pression générée par la pompe hydraulique (8) ; et
une génératrice (16) configurée pour être entraînée par le moteur hydraulique (10),
**caractérisée en ce que** au moins un de la pompe hydraulique (8) ou du moteur hydraulique (10) est une machine hydraulique (20) du type à piston radial selon l'une quelconque des revendications 1 à 5.
